# EUROPEAN PATENT APPLICATION

(11) **EP 2 216 166 A2**
(43) Date of publication of application: **11.08.2010**
(21) Application number: 09160803.4
(22) Date of filing: 20.05.2009
(51) Int. Cl.: B29D 35/12, A43B 9/02, A43B 9/12

(54) **Method for making a shoe**

(30) Priority: 04.02.2009 TW 98103509
(71) Applicant: Chi, Cheng-Hsian, Hsi-Tun Dist Taichung City (TW)
(72) Inventor: Chi, Cheng-Hsian, Hsi-Tun Dist Taichung City (TW)
(74) Representative: Texier, Christian

(57) **Abstract**

A method for making a shoe (80) includes the steps of: a) preparing a midsole (41); b) molding a substrate into a stepped surrounding wall member (50) having top and bottom open end portions (57, 51), a thick lower wall section (54), a thin upper wall section (52), and a shoulder (55) formed at a junction of the thick lower wall section (54) and the thin upper wall section (52); c) preparing an upper (60) including an open bottom end (62) ; d) bonding the thick lower wall section (54) of the stepped surrounding wall member (50) to the midsole (41); e) placing the upper (60) on the stepped surrounding wall member (50) with a surface of the thin upper wall section (52) in contact with a surface of the upper (60) and with the open bottom end (62) of the upper (60) engaging the shoulder (55); and f) securing the open bottom end (62) of the upper (60) to the thin upper wall section (52).

## Description

The invention relates to a method for making a shoe, more particularly to a method for making a shoe in a manner of simplifying production procedure, reducing costs, and increasing production efficiency.

Referring to Figures 1 and 2, U.S. Patent Application Publication No. 2003/0066595 discloses a method for making a shoe, which includes the steps of:
a) preparing an upper 11 and a sole unit 12, the upper 11 being prepared by cutting and sewing a substrate having a proper shape, and including a bottom portion 111, a front portion 113 extending upwardly from a front periphery of the bottom portion 111, and a heel portion 112 extending upwardly from a rear periphery of the bottom portion 111, the sole unit 12 including a midsole blank 13 and an outsole 14;
b) fittingly sleeving the upper 11 on a last 21, and clipping the upper 11 on the last 21 with an upper mold part 22 of a mold 23, which additionally includes a bottom mold part 24 and two opposite side mold parts 25;
c) applying an adhesive layer to a top surface of the outsole 14 and a peripheral bottom edge of the upper 11, and placing a thermal-setting adhesive film 15 on a top surface of the midsole blank 13, the peripheral bottom edge of the upper 11 should be coarsened prior to application of the adhesive layer thereon;
d) adhering a peripheral edge 131 of the midsole blank 13 to the upper 11;
e) placing the sole unit 12 and the upper 11 together with the last 21 on the bottom mold part 24 of the mold 23, and closing the mold 23;
f) adhering the midsole blank 13 to the outsole 14 by heating and pressing the mold 23, and at the same time, melting the thermal-setting adhesive film 15 and adhering the upper 11 to the midsole blank 13 while molding the midsole blank 13 into a midsole;
g) cooling the mold 23; and
h) opening the mold 23 and trimming the shoe thus produced to obtain a final shoe product.

The aforesaid method for making a shoe has the following disadvantages:
1. Since the upper 11 includes the bottom portion 111, the front portion 113, and the heel portion 112, the substrate for making the upper 11 is relatively large, and a relatively large amount of waste material would be trimmed from the upper 11 thus produced.
2. When an additional decorative member (not shown) is to be fastened on the sole unit 12, an additional processing step, such as sewing or adhering, is required.

Therefore, the object of the present invention is to provide a method for making a shoe capable of reducing the amount of waste material that should be trimmed, increasing the production efficiency by simplifying the production procedure, and reducing the production costs.

Accordingly, the method for making a shoe of this invention includes the steps of:
a) preparing a midsole;
b) molding a foamable thermoplastic substrate at a temperature ranging from 110 to 150 °C into a stepped surrounding wall member having top and bottom open end portions, a thick lower wall section having the bottom open end portion, a thin upper wall section having the top open end portion and connected to the thick lower wall section, and a shoulder formed at a junction of the thick lower wall section and the thin upper wall section, the volume of the thermoplastic substrate being larger than that of the stepped surrounding wall member by 5% to 42%;
c) preparing an upper including an open top end and an open bottom end;
d) bonding the thick lower wall section of the stepped surrounding wall member to the midsole;
e) placing the upper on the stepped surrounding wall member with a surface of the thin upper wall section in contact with a surface of the upper and with the open bottom end of the upper engaging the shoulder; and
f) securing the open bottom end of the upper to the thin upper wall section.

Other features and advantages of the present invention will become apparent in the following detailed description of the preferred embodiments with reference to the accompanying drawings, of which:

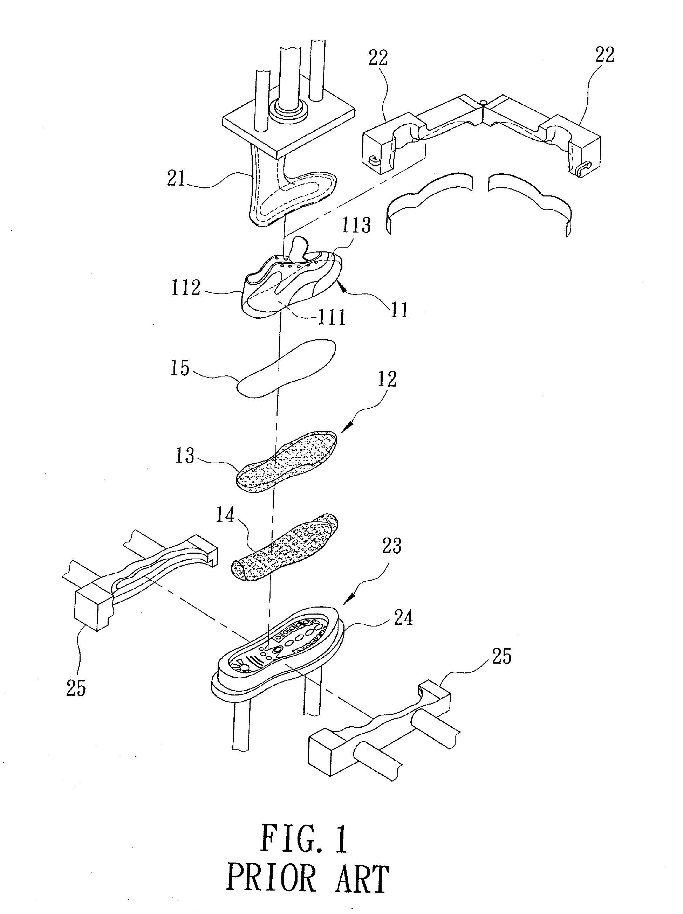

Figure 1 is an exploded perspective view illustrating a conventional method for making a shoe disclosed in U.S. Patent Application Publication No. 2003/0066595;

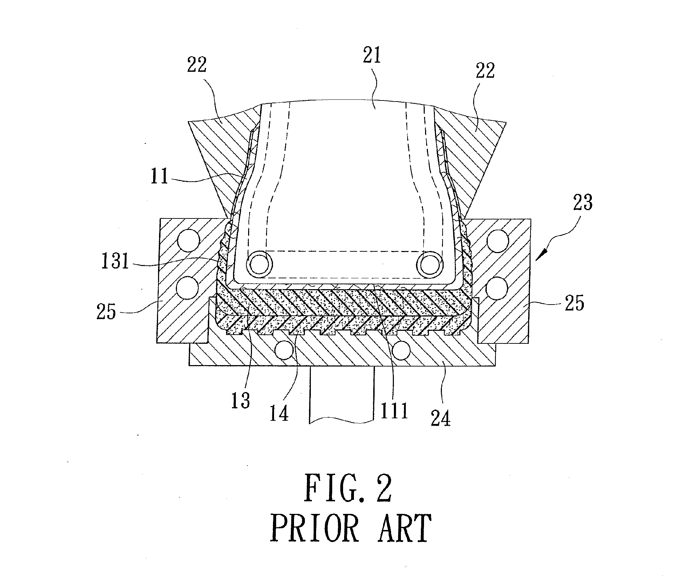

Figure 2 is a sectional view illustrating the conventional method;
Figure 3 is a flow chart of a first preferred embodiment of a method for making a shoe according to this invention;
Figure 4 is an exploded schematic view illustrating a sole unit and a stepped surrounding wall member used or formed in the first preferred embodiment;
Figure 5 is a perspective view of a shoe made by the first preferred embodiment;
Figure 6 is a sectional view of the shoe illustrated in Figure 5;
Figure 7 is a sectional view of a shoe made by a second preferred embodiment of a method for making a shoe according to this invention;
Figure 8 is a sectional view of a shoe made by a third preferred embodiment of a method for making a shoe according to this invention;
Figure 9 is a sectional view of a shoe made by a fourth preferred embodiment of a method for making a shoe according to this invention;
Figure 10 is a schematic view of another example of a shoe made by the method of the present invention; and
Figure 11 is a perspective view of a mold used in the first preferred embodiment.

Before the present invention is described in greater detail, it should be noted that like elements are denoted by the same reference numerals throughout the disclosure.

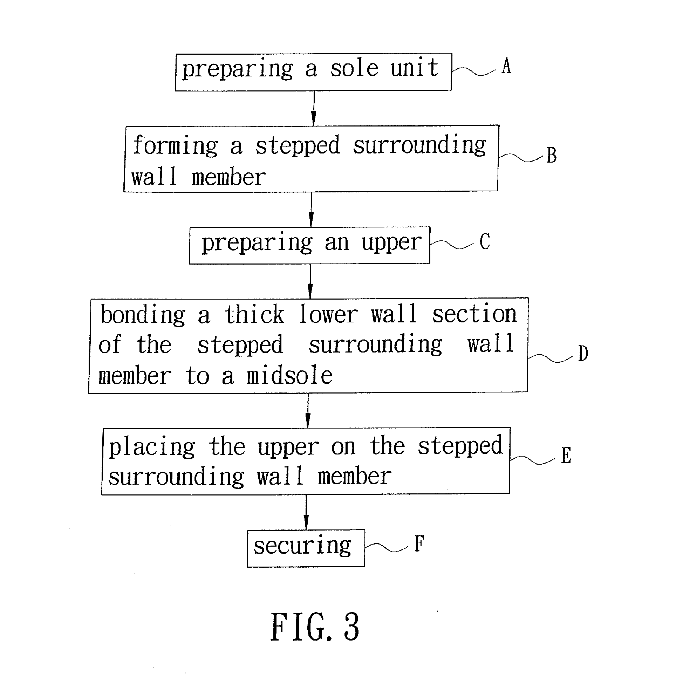

Referring to Figure 3, the first preferred embodiment of the method for making a shoe according to this invention includes the steps of:

### A) preparing a sole unit:

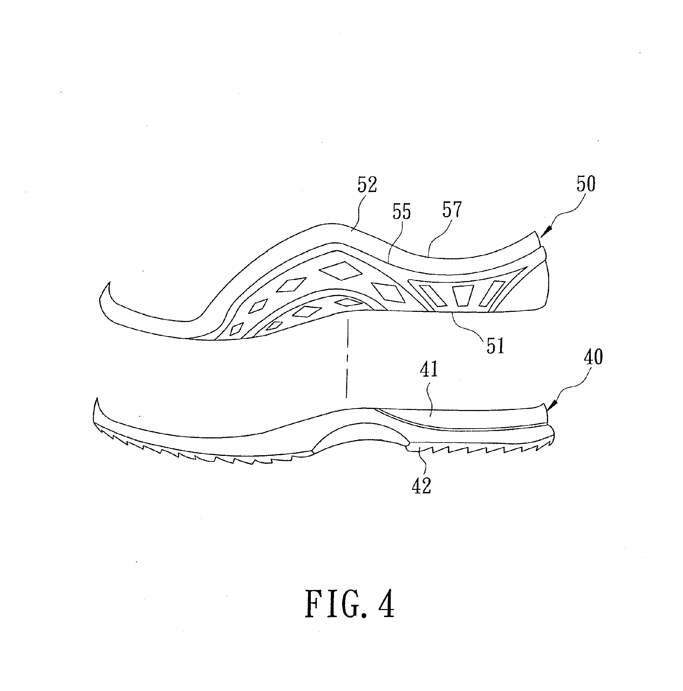

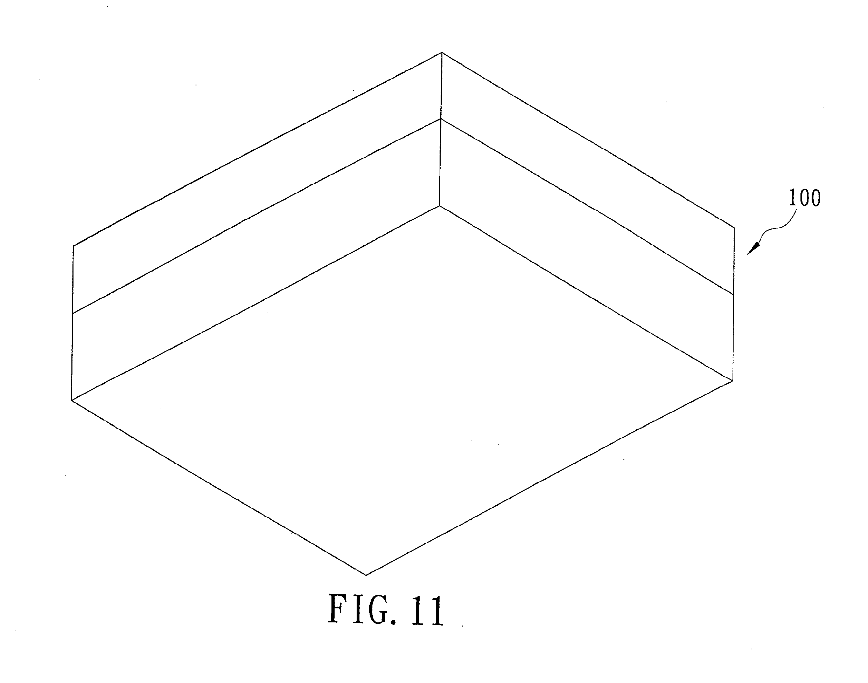

Referring to Figures 4 and 11, a sole unit 40 is prepared, which includes a midsole 41 and an outsole 42. The outsole 42 is made of an abrasion resistant material. The midsole 41 can be prepared in advance or can be made by heating and pressing a thermoplastic foamable midsole blank in a mold 100 when performing the method of the present invention. When the midsole 41 is made by heating and pressing the thermoplastic foamable midsole blank in the mold 100, one or more decorative members (not shown) can be disposed on the midsole blank prior to the heating and pressing procedure so as to provide the midsole 41 with a decorative effect. The sole unit 40 can be made by directly bonding the outsole 42 to the midsole 41 or by bonding the outsole 42 to the midsole blank when molding the midsole 41. It should be mentioned that, if necessary, the front portion of the outsole 42 can cover the front portion of the midsole 41.

### B) forming a stepped surrounding wall member:

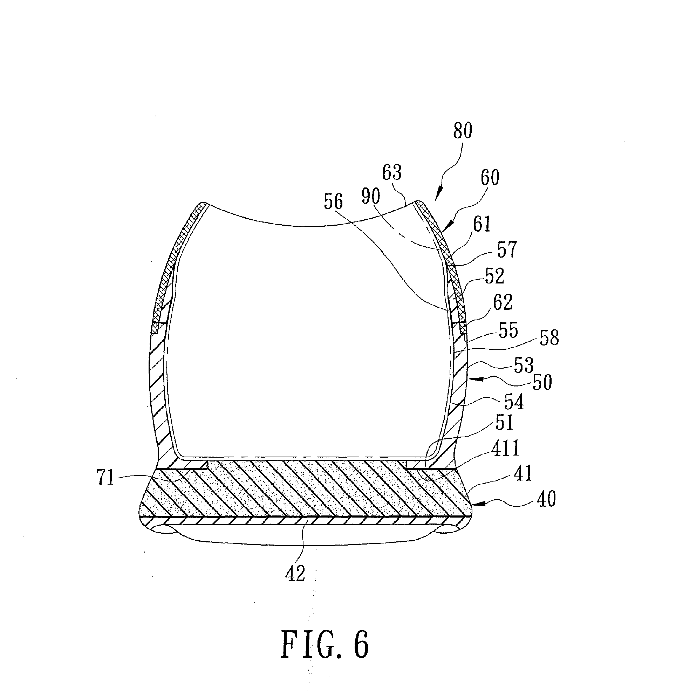

Referring to Figures 4 and 6, a foamable thermoplastic substrate is molded into a stepped surrounding wall member 50 by heating and pressing the substrate at a temperature ranging from 110 to 150 °C for a period ranging from 1 to 7 minutes. The stepped surrounding wall member 50 is obtained after cooling. The heating and cooling steps can be conducted by any manner well known in the art, such as the heating and cooling manners disclosed in the aforesaid prior art.

The foamable thermoplastic substrate is preferably made of ethylene vinyl acetate copolymer, polyethylene, thermoplastic rubber, or the like. Preferably, the volume of the thermoplastic substrate is larger than that of the stepped surrounding wall member 50 by 5% to 42%.

The stepped surrounding wall member 50 has top and bottom open end portions 57, 51, a thick lower wall section 54 having the bottom open end portion 51, a thin upper wall section 52 having the top open end portion 57 and connected to the thick lower wall section 54, and a shoulder 55 formed at a junction of the thick lower wall section 54 and the thin upper wall section 52. In the stepped surrounding wall member 50 formed in this preferred embodiment, the bottom open end portion 51 is bent inwardly. The shoulder 55 is formed on an outer surface 53 of the stepped surrounding wall member 50.

Optionally, the outer surface 53 of the stepped surrounding wall member 50 can be provided with a decorative pattern by forming the stepped surrounding wall member 50 using a mold having a predetermined pattern or by disposing one or more decorative members (not shown) on the outer surface 53 of the stepped surrounding wall member 50 during the molding of the stepped surrounding wall member 50.

Preferably, a reinforcing member 56 is adhered on an inner surface 58 of the stepped surrounding wall member 50 so as to enhance the structural strength of the stepped surrounding wall member 50. The reinforcing member 56 can be made of a fabric or various plastic films (e.g., a thermoplastic polyurethane film).

### C) preparing an upper:

Referring again to Figure 6, an upper 60 is prepared, which includes an open top end 63, an open bottom end 62 corresponding to the thin upper wall section 52 of the stepped surrounding wall member 50, and a hollow body 61 extending between the open top end 63 and the open bottom end 62. The upper 60 is made of fabric, leather, plastic, etc.

### D) bonding the thick lower wall section of the stepped surrounding wall member to the midsole:

The thick lower wall section 54 of the stepped surrounding wall member 50 is bonded to the midsole 41 by adhering the bottom open end portion 51 of the thick lower wall section 54 of the stepped surrounding wall member 50 to a top surface 411 of the midsole 41 using a glue 71.

### E) placing the upper on the stepped surrounding wall member:

The upper 60 is placed on the stepped surrounding wall member 50 with a surface of the thin upper wall section 52 in contact with a surface of the upper 60 and with the open bottom end 62 of the upper 60 engaging the shoulder 55. The surface of the thin upper wall section 52 that contacts the upper 60 is a portion of the outer surface 53 of the stepped surrounding wall member 50 in this embodiment.

### F) securing:

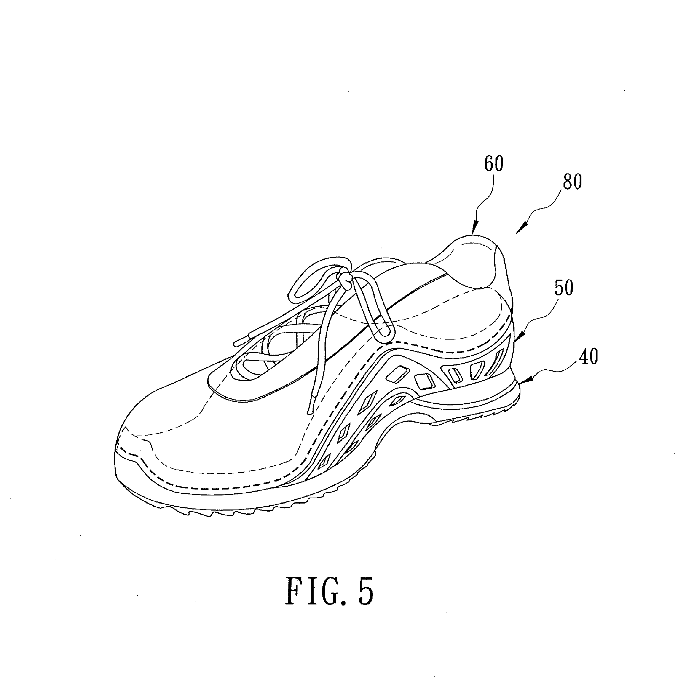

Referring to Figures 5 and 6, the open bottom end 62 of the upper 60 is secured to the thin upper wall section 52 of the stepped surrounding wall member 50 by sewing so as to obtain a shoe 80. Preferably, the securing of the open bottom end 62 of the upper 60 to the thin upper wall section 52 of the stepped surrounding wall member 50 is conducted by adhesive bonding and then by sewing.

It should be noted that the step D) can be carried out after or prior to the step F).

Specifically referring to Figure 6, preferably, a lining layer 90 is secured to the inner surfaces of the upper 60 and the stepped surrounding wall member 50 by sewing or by adhesive bonding so as to enhance comfort when wearing the shoe 80.

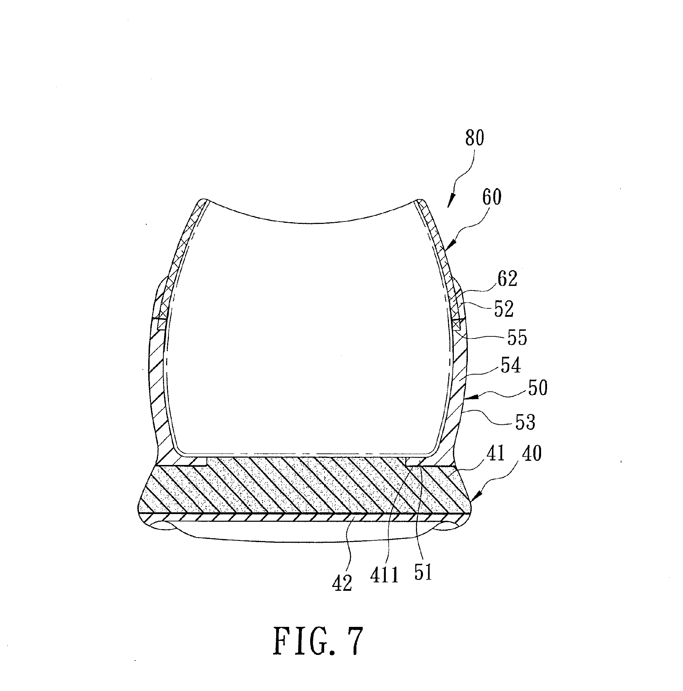

Referring to Figure 7, the second preferred embodiment of the method for making a shoe according to this invention is similar to the first preferred embodiment except that the shoulder 55 of the stepped surrounding wall member 50 made in this preferred embodiment is formed on an inner surface of the stepped surrounding wall member 50 so that the surface of the thin upper wall section 52 that contacts the upper 60 is a portion of the inner surface of the stepped surrounding wall member 50.

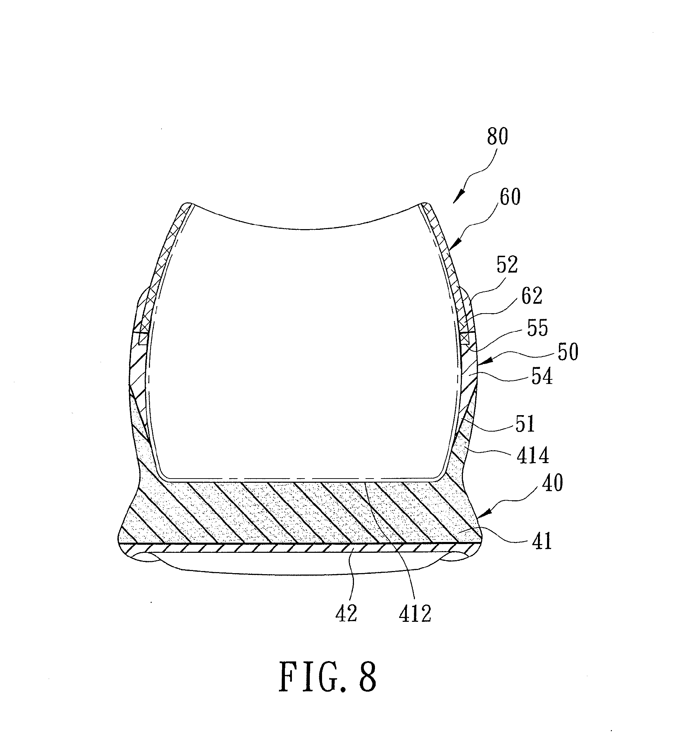

Referring to Figure 8, the third preferred embodiment of the method for making a shoe according to this invention is similar to the second preferred embodiment except that the midsole 41 used in this preferred embodiment has a top surface 412 and a peripheral flange 414 extending laterally and upwardly from the top surface 412, and that, in step D), the bottom end portion 51 of the thick lower wall section 54 of the stepped surrounding wall member 50 is inserted into the peripheral flange 414 and adhered to an inner surface of the peripheral flange 414.

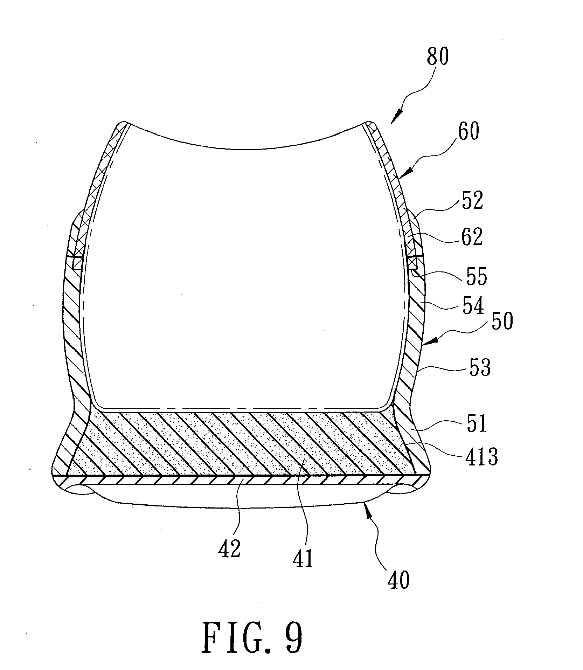

Referring to Figure 9, the fourth preferred embodiment of the method for making a shoe according to this invention is similar to the second preferred embodiment except that in the step D) of this preferred embodiment, the bottom open end portion 51 of the thick lower wall section 54 of the stepped surrounding wall member 50 is placed around the midsole 41 and adhered to a peripheral outer surface 413 of the midsole 41.

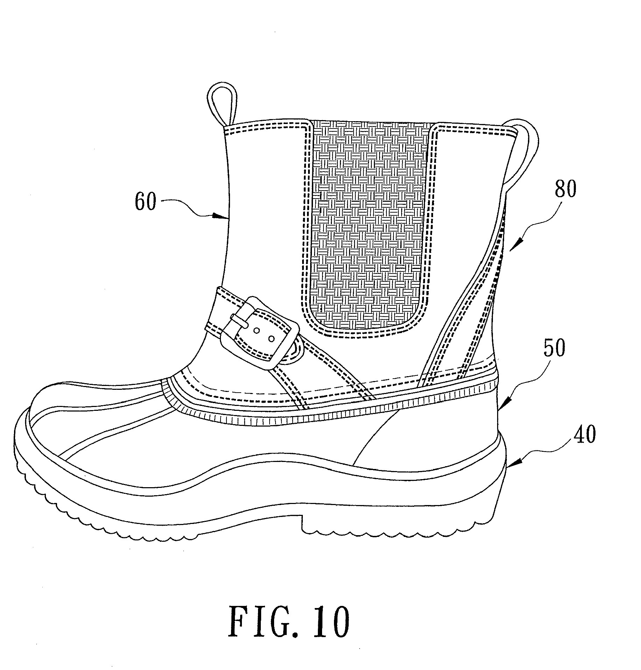

Referring to Figure 10, a shoe 80 in a form of a boot can be made by the method of the present invention, in which the stepped surrounding wall member 50 is in a form that covers a foot of a user.

In view of the aforesaid, the method for making a shoe according to this invention has the following advantages:
1. Since the bottom end 62 of the upper 60 is open, the material used for making the upper 60 and the waste produced thereby can be reduced as compared to the prior art in which the upper 11 includes the bottom portion 111.
2. The decorative member can be fastened onto the stepped surrounding wall member 50 when molding the stepped surrounding wall member 50 by heating and pressing in a mold so as to provide the stepped surrounding wall member 50 with a decorative effect. Therefore, the additional step of fastening the decorative member, such as sewing or adhering, can be omitted.
3. Since the shoulder 55 is formed at a junction of the thick lower wall section 54 and the thin upper wall section 52, the upper 60 can be easily positioned relative to the stepped surrounding wall member 50 by abutting the open bottom end 62 of the upper 60 against the shoulder 55 of the stepped surrounding wall member 50 prior to securing the open bottom end 62 of the upper 60 to the thin upper wall section 52 of the stepped surrounding wall member 50. Therefore, the productivity of the present method is relatively high.
4. Since the upper 60, the stepped surrounding wall member 50, and the midsole 41 can be prepared separately in the method of the present invention, the colors and the hardness thereof can be varied according to the specific requirement for the shoe to be made. Therefore, the flexibility of the method of the present invention is improved.

## Claims

1. A method for making a shoe (80), **characterized by** the steps of:
a) preparing a midsole (41);
b) molding a foamable thermoplastic substrate at a temperature ranging from 110 to 150 °C into a stepped surrounding wall member (50) having top and bottom open end portions (57, 51), a thick lower wall section (54) having the bottom open end portion (51), a thin upper wall section (52) having the top open end portion (57) and connected to the thick lower wall section (54), and a shoulder (55) formed at a junction of the thick lower wall section (54) and the thin upper wall section (52), the volume of the thermoplastic substrate being larger than that of the stepped surrounding wall member (50) by 5% to 42%;
c) preparing an upper (60) including an open top end (63) and an open bottom end (62);
d) bonding the thick lower wall section (54) of the stepped surrounding wall member (50) to the midsole (41) ;
e) placing the upper (60) on the stepped surrounding wall member (50) with a surface of the thin upper wall section (52) in contact with a surface of the upper (60) and with the open bottom end (62) of the upper (60) engaging the shoulder (55); and
f) securing the open bottom end (62) of the upper (60) to the thin upper wall section (52).

2. The method as claimed in Claim 1, **characterized in that** the open bottom end (62) of the upper (60) is secured to the thin upper wall section (52) of the stepped surrounding wall member (50) by sewing.

3. The method as claimed in Claim 1, **characterized in that** the open bottom end (62) of the upper (60) is secured to the thin upper wall section (52) of the stepped surrounding wall member (50) by adhesive bonding.

4. The method as claimed in Claim 1, **characterized in that**, in step (d), the bottom open end portion (51) of the thick lower wall section (54) of the stepped surrounding wall member (50) is bent inwardly and adhered to a top surface (411) of the midsole (41).

5. The method as claimed in Claim 1, **characterized in that,** in step (d), the bottom open end portion (51) of the thick lower wall section (54) of the stepped surrounding wall member (50) is placed around the midsole (41) and adhered to a peripheral outer surface (413) of the midsole (41).

6. The method as claimed in Claim 1, **characterized in that** the midsole (41) has a top surface (412) and a peripheral flange (414) extending laterally and upwardly from the top surface (412), and that, in step (d), the bottom end portion (51) of the thick lower wall section (54) of the stepped surrounding wall member (50) is inserted into the peripheral flange (414) and adhered to an inner surface of the peripheral flange (414).

7. The method as claimed in Claim 1, **characterized in that** the shoulder (55) is formed on an outer surface (53) of the stepped surrounding wall member (50), and the surface of the thin upper wall section (52) that contacts the upper (60) is a portion of the outer surface (53) of the stepped surrounding wall member (50).

8. The method as claimed in Claim 1, **characterized in that** the shoulder (55) is formed on an inner surface of the stepped surrounding wall member (50), and the surface of the thin upper wall section (52) that contacts the upper (60) is a portion of the inner surface of the stepped surrounding wall member (50).

9. The method as claimed in Claim 1, further **characterized by** bonding an outsole (42) to the midsole (41).

10. The method as claimed in Claim 1, further **characterized by** bonding an outsole (42) to the midsole (41) when molding the midsole (41).
